# EUROPEAN PATENT APPLICATION

(11) **EP 3 270 305 A1**
(43) Date of publication of application: **17.01.2018**
(21) Application number: 17181078.1
(22) Date of filing: 12.07.2017
(51) Int. Cl.: G06F 17/30, G06F 17/27, G06F 3/06

(54) **METHOD FOR DEDUPLICATING CONTACTS FROM DISTRIBUTION LISTS**

(30) Priority: 13.07.2016 IT 201600073395
(71) Applicant: Refine Direct S.r.l., 20125 Milano (MI) (IT)
(72) Inventor: Zilli, Stefano, 20125 Milano (MI) (IT)
(74) Representative: Petraz, Gilberto Luigi

(57) **Abstract**

Method for deduplicating contacts from distribution lists, comprising: a reception step, by a platform (10) installable on a processor, of a plurality of distribution lists (14, 15, 16, 19) sent by one or more distributors (11, 12, 13) or bodies (17) and which include a plurality of contacts; said platform (10) is univocal and centralized for all the distributors or bodies involved; a non-reversible encryption step (18) in which each of the contacts present in said lists (14, 15, 16, 19) is assigned a univocal encrypted code; a centralized comparison and processing step, by means of the platform (10), of the contacts present in said distribution lists in order to obtain distribution lists (14p, 15p, 16p) with univocally determined contacts and therefore without double contacts; a delivery step of said distribution lists (14p, 15p, 16p) without double contacts at least to said one or more distributors (11, 12, 13). A further comparison step, which can be activated as selected by a given body (17), is performed with the lists (19) in the possession of the body (17), to obtain new lists (14e, 15e, 16e) that are without the contacts already in the possession of the body and that will be returned to the respective distributors (11, 12, 13).

## Description

### FIELD OF THE INVENTION

The present invention concerns a method for deduplicating contacts from distribution lists. In particular, the present invention concerns a method for deduplicating said contacts which can be actuated in a centralized manner. The present invention also concerns a method for deduplicating contacts between distribution lists and lists already in the possession of the body commissioning an advertising campaign.

The present invention also concerns an apparatus for deduplicating contacts from distribution lists.

### BACKGROUND OF THE INVENTION

It is known that there are advertising campaigns in which a particular body, which wants to offer a service to potential clients, for example a sales service, sends these potential clients a notice, a promotion letter, an advertising letter, or suchlike.

These can be sent through traditional mail but, at present and more frequently, they are sent through the often automated sending of emails, SMS (Short Message Service), or suchlike.

A body that intends to initiate an advertising campaign and send a promotional message, for example via email, generally sends the message to contact lists or distribution lists, which are made available by publishers or suppliers (hereinafter referred to indifferently as "editors", "publishers" or "suppliers") who are in possession of such contacts, which use different platforms for sending the messages. The platforms for sending messages are not in communication with each other.

For example, supposing that the body intending to initiate a particular advertising campaign belongs to a specific product sector, let us say for example, the automotive sector, the contact lists could be made available by publishers or suppliers that bring together people interested in that product sector, for example publishers of websites, magazines or suchlike to which car enthusiasts are subscribed.

The body intending to initiate an advertising campaign will address these distributors so that they will send to these contact lists the message for the advertising campaign. The body runs the risk of contacting, through the distributors, contacts that are already part of its client database or potential clients acquired with previous marketing activities.

Indeed, a certain contact could be present, as often happens, in several contact lists or distribution lists in the possession of several distributors or publishers or actually lists in possession of the body.

The fact that one or more contacts can be present in several contact lists naturally causes various problems when starting the advertising campaign.

A first problem is immediately related to the fact that the potential client, identified in several distribution lists, receives the same advertising campaign of the body many times.

The body that wants to start the advertising campaign suffers from this situation in economic terms, and in terms of image and efficiency of the advertising campaign itself.

Another disadvantage, if the campaign is started by email messages, is the supply of a large number of advertising emails in the mailboxes and the perception of the receiver that it is a so-called spamming phenomenon, that is, unwanted messages (even if in fact the sending is legitimate).

The body commissioning the advertising campaign would also like to make sure that it only contacts potential new clients and differentiates the communication between contacts already in its lists and potential new contacts, thus not disturbing its existing clients or reserving different promotions among potential new clients and existing clients.

There is therefore a need to obtain a method and an apparatus for deduplicating contacts from distribution lists that can overcome at least one of the disadvantages of the state of the art.

There is therefore, in particular, the need to obtain a method and an apparatus for deduplicating contacts between distribution lists and the body's own lists.

One purpose of the present invention is therefore to perfect a method for deduplicating contacts from distribution lists and the body's lists, which acts in a centralized manner and allows a body to initiate an advertising campaign effectively.

Another purpose of the present invention is to perfect a method for deduplicating contacts from distribution lists that allows a given body to send a univocal message to a given contact, so that the latter does not receive the same communication several times.

Another purpose of the present invention is to perfect a method for deduplicating contacts from distribution lists which allows to significantly reduce the phenomenon of overcrowding and the perception of spamming following the sending of commercial messages or suchlike, also reducing the rate of subscription cancellations from the distributor's lists for excessive advertising communications.

Another purpose of the present invention is therefore to perfect a method that allows effective deduplication with contacts already in the possession of a particular body, which is centralized and which also uses secure and non-reversible encryption techniques in order to ensure data security and confidentiality.

Another purpose of the present invention is to obtain an apparatus to actuate said method, advantageously centralized, of deduplicating contacts from distribution lists.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes and according to a first aspect of the invention, a method for deduplicating contacts from distribution lists comprises: a reception step, by a platform installable on a processor, of a plurality of distribution lists which include a plurality of contacts, each list being transmitted by its supplier or distributor autonomously, for example by means of independent access to the platform; the platform is univocal and centralized for all the distributors or bodies involved; a non-reversible encryption step (for example a hash encryption function) in which each of the contacts present in the lists is assigned a univocal encrypted code; a centralized comparison and processing step, by means of the platform, of the contacts present in the distribution lists in order to obtain distribution lists with univocally determined contacts and therefore without double contacts; a step of delivering the distribution lists without double contacts so that they are usable by the original supplier or distributor, to which the platform returns the lists without double contacts, for example by means of independent access thereto.

The hashing function can be performed after a step of normalization of the contact received. Indeed, if the distribution lists do not have a homogeneous format, the hashing function alone, without a prior normalization of the contacts (that is, their conversion into a homogeneous format), renders the deduplicating process effective only on those contacts with a homogeneous format.

According to another aspect of the invention, a step of controlling the distribution lists supplied by the platform with the lists already in the possession of the body is carried out, in order to obtain distribution lists from which the contacts already in the body's possession have been excluded. The deduplication therefore occurs, advantageously, also on the lists already in the body's possession.

Preferably, if there are double contacts present in two or more lists, the present method follows a proportional criterion to establish from which distribution list or lists to eliminate the double contact, or possibly another criterion chosen by the body, in particular a deduplication priority established by the client according to the qualities of the supplier or distributor of the list or according to his own planning needs.

The method can comprise other operating steps or functions, for example a "tracking" function, a function of verifying active contacts, a function of crossed deduplication, a function based on an economic criterion in the choice of the contacts or other. These functions can be present singularly or variously combined.

Another purpose of the invention is a platform installable on a processor and configured to actuate a method for deduplicating contacts from distribution lists.

The deduplication, as we said, occurs without memorization in the platform of the contacts of the lists *en clair* but memorizing the contacts in an encrypted manner using functions that the platform makes available, with a non-reversible algorithm that guarantees the protection of the data of the distributors and body.

The platform acts with a centralized deduplication, which puts it at a higher level than the single distributor of lists and the body itself, and therefore guarantees the deduplication among all the distributors involved by the body (as well as the lists of the body itself); it is therefore really effective in the deduplication compared to a possible deduplication that is done autonomously by individual distributors who would not have access to the lists of the other distributors.

The platform is suitable to satisfy the needs of several bodies, and therefore to memorize separately their respective contact lists, as well as being able to manage the deduplication process relating to a specific advertising campaign of a body considering the lists of that body but not the lists belonging to other bodies that can be memorized in the platform. Moreover, the platform is suitable to manage the deduplication process relating to a specific advertising campaign of a body considering all the distribution lists memorized in the platform, or considering only the distribution lists belonging to a sub-group of suppliers or distributors that the body has involved for said advertising campaign.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a block diagram that shows the present method and apparatus for deduplicating contacts from distribution lists and of the body;
- fig. 2 is a block diagram relating to the reception step of the contact lists by the centralized platform;
- fig. 3 is a block diagram relating to the deduplication step performed by the centralized platform.

### DETAILED DESCRIPTION OF SOME EMBODIMENTS

We shall now refer in detail to the various embodiments of the present invention, of which one example is shown in the attached drawings. The example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing the embodiment, we must also clarify that the present description is not limited in its application to details of the construction and disposition of the components as described in the following description using the attached drawing. The present description can provide other embodiments and can be obtained or executed in various other ways. We must also clarify that the phraseology and terminology used here is for the purposes of description only, and cannot be considered as limitative.

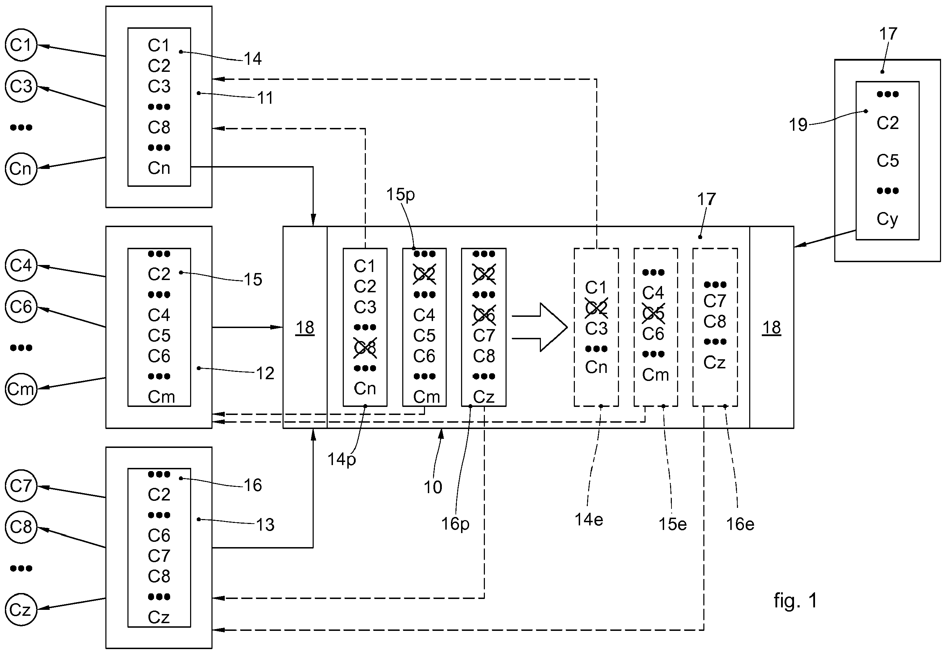

Fig. 1 shows a platform 10, in particular a centralized platform, suitable to be installed on any computer, for example having a server function, on which an appropriate program for actuating the present method for deduplicating data is installed.

The platform 10 is able to receive the contact lists from a plurality of contact list distributors and the bodies for their own lists, while retaining for each subject accessibility only to the lists of its own competence, thus making only their own distribution lists accessible to each distributor, and to each body only its own contact lists.

According to the present method and as mentioned above, in addition to the deduplication between distribution lists, a body can perform a further check on the contact lists in order to exclude additional contacts, for example contacts who have already been sent a previous and recent advertising campaign, contacts who have recently had a service delivered or a product sold or other, using the functions provided by the platform 10 that can exclude such contacts from the lists in the possession of the distributor or distributors.

By way of example, three distributors 11, 12 and 13, for example, publishers, each in possession of a distribution list 14, 15 and 16, are shown in this diagram. The publishers can be, for example, web site managers to which enthusiasts of a given activity, a particular service, or suchlike are subscribed. A body 17, in possession of the list 19, is also shown, which could for example consist of clients already acquired by the body, which the body itself does not want to contact with new advertising communications.

Naturally, there could be a different number of distributors and bodies from what is shown here, and each of them could have more than one list.

The first distributor 11, in this example, has a first distribution list 14 in which there is a number "n" of contacts from C1 to Cn.

The second distributor 12 has a second distribution list 15 in which there is a number "m" of contacts C 1 to Cm.

The third distributor 13 has a third distribution list 16 in which there is a number "z" of contacts C1 to Cz.

The body 17 has a list 19 in which there is a number "y" of contacts from C1 to Cy.

The distribution lists 14, 15, and 16 are sent by the distributors 11, 12, and 13 to the platform 10, which before memorizing them performs a first encryption step, block 18 of each of the contacts on these lists, so as to perform the subsequent steps of memorizing, analyzing, processing and then deduplicating contacts associated with encrypted codes. In essence, a univocal encrypted code will be associated with each of the contacts from C1 to Cn, from C1 to Cm, and from C1 to Cz.

In the same way as has just been described for the distribution lists, the contact list 19 is sent by the body 17 to the platform 10 which before memorizing it performs an encryption step, block 18, of each of the contacts on said list.

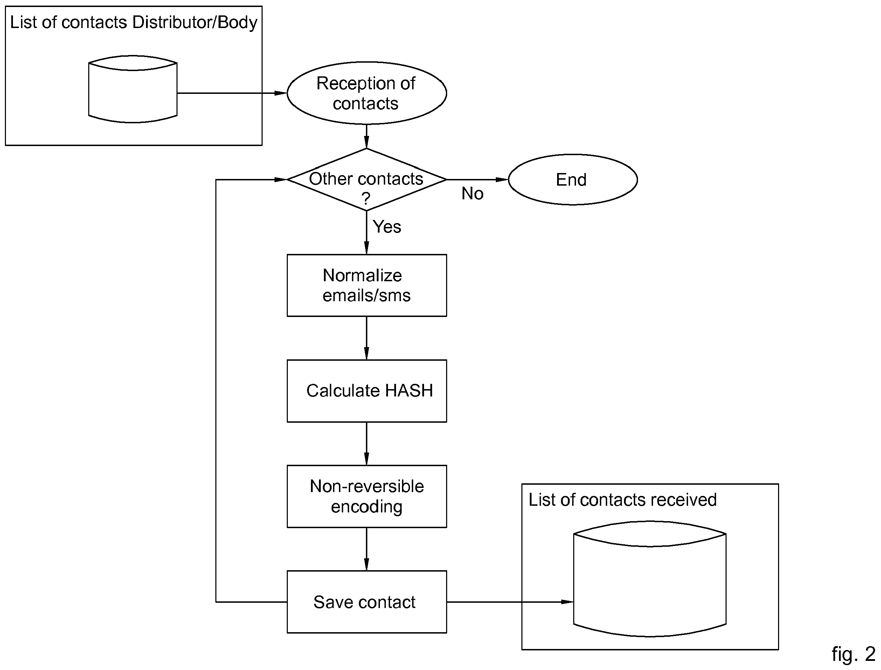

A procedure for receiving the lists 14, 15, 16 and 17 by the platform 10 is shown for example in fig. 2: the platform 10 receives the contact lists, for example in the form of an email address or telephone number enabled for receiving SMS messages (hereinafter referred to as "SMS number").

For each contact received from the distributors 11, 12 or 13 and the body 17, a first normalization step of the email address or SMS number is initiated, to eliminate informational redundancies and risks of inconsistencies in a database associated with the platform.

Subsequently, the platform performs a hashing function on the email address or SMS number, and obtains a non-reversible hash code. The encryption process is, therefore, advantageously non-reversible.

Then the contact is saved and thus a list of contacts received is obtained.

The reception procedure also includes a search loop to look for other possible contacts, therefore when there are no more contacts received, the procedure described above ends.

The distribution lists 14, 15 and 16 and the list 19 can be sent to the platform by any data transmission system, for example by means of an Internet network.

It is also possible to suppose that the platform 10 is installed on a server, and that both the body 17 and the distributors 11, 12 and 13 have access to said platform, via the internet and suitable access credentials.

With regard to the deduplication process performed by the platform 10, the contacts are deduplicated on the individual advertising campaign of the body that is to be run, and hence on the contact lists (both the distributors' distribution lists and any possible lists of the body itself) which are selected by the body for said campaign.

In this illustration, given by way of example, it is assumed that the body 17 wants to initiate an advertising campaign by sending messages to a certain number of contacts, identified inside the distribution lists 14, 15 and 16.

The platform 10 considers the total set consisting of the contacts belonging to the various original distribution lists 14, 15, 16. Inside this set, the platform detects the contacts that appear two or more times, which are thus duplicates, and works by identifying the subset of these duplicated contacts with respect to the remaining contacts (the subset of univocal contacts).

At this point, for each original list 14, 15 or 16, the platform creates a new associated list 14p, 15p or 16p that consists of only the contacts of the subset of univocal contacts that were present on the original list.

Subsequently, the platform processes the subset of duplicated contacts, considering them once only for each duplicated contact, and assigns them to the new lists 14p, 15p, and 16p, so that each contact is assigned to only one of these new associated lists (thus making the contact univocal and no longer duplicated between the new associated lists). For each contact to be assigned, the list is selected among the new lists associated with the original lists that contained said duplicated contact, a choice made according to the criterion chosen between those available by the body 17 performing the advertising campaign according to its own specific planning needs.

As an additional step, if the body also wants to make a deduplication that excludes contacts that are already present in one or more lists in its own available lists, that is, the contacts contained, for example, in the body's list 19, the platform processes each new list 14e, 15e 16e, searching for the contacts also present in the client lists (list 19 of the body in the present example) and deleting them from the new lists so that the new lists do not contain any contact in the client lists.

By way of example, as can be seen from the drawing, one can assume that the contact C2 is present on each of the lists 14, 15 and 16 received by the platform 10.

Following, for example, a specific criterion chosen by the body for deduplication, the platform 10 will eliminate contact C2 from the distribution lists 15 and 16, assigning it univocally to list 14 alone.

The criterion of choice on the distribution list where to univocally maintain the contact can be of various types (for example, proportional or according to priority lists), among the criteria that will be made available on the platform.

The contact C2 in this case is kept in the first distribution list 14 provided by the distributor 11 and eliminated or deduplicated from the distribution lists 15 and 16.

In this example, we have supposed that the contacts C6 and C8, for example, are also present in several distribution lists.

In this example, contact C6 is univocally maintained in distribution list 15 and eliminated from distribution list 16.

The contact C8, on the contrary, is univocally maintained in the distribution list 16 and eliminated from distribution list 14.

Downstream of this control step, distribution lists 14p, 15p and 16p are obtained, without double contacts.

The distribution lists 14p, 15p, and 16p, verified by the platform 10, are processed in the next pass to exclude users contained in the body's list 19, which we suppose contain contacts C2 and C5, to obtain the new lists 14e, 15e and 16e. Therefore, the platform will eliminate contact C2 that was present in list 14p, and contact C5 that was present in list 15p.

As previously said, the body 17 itself can be credited to connect to the platform 10, and here it will have access to the deduplicated numbers available for the distribution lists 14e, 15e and 16e without double contacts and contacts belonging to the body's lists.

In essence, the body will see the quantities available for the different deduplicated lists without double contacts and will substantially be able to choose on which lists and with what quantities to actually proceed with acquiring the advertising campaign. Deduplicated lists selected by the body will then be restored by the platform to the distributors who will send the advertising campaign to the corresponding contacts.

Advantageously, the distribution lists (for example, 14e, 15e and 16e) are each sent to the respective distributor (in the example, 11, 12 and 13, respectively), who will proceed with their sending platforms to transmit the advertising message.

Once this verification is completed, the body 17 will have the guarantee that the distributors will be in possession of lists 14e, 15e and 16e that have been double checked, hence they have been subjected to a control that takes into account both the deduplication of the lists 14, 15 and 16 supplied by distributors 11, 12 and 13, but also the elimination of contacts contained, for example, in a database 19 in the possession of the body 17.

According to one aspect of the method, therefore, the lists 14e, 15e and 16e that have been further controlled with respect to the contact list of the body 17 are sent through the platform 10 to the distributors, by means of any data transmission system whatsoever, for example via the Internet, or other.

In essence, the body 17 can make the advertising campaign operate on the lists 14e, 15e and 16e only to the univocal contacts to which the distributors will send it, efficiently and without running the risk of sending the same message two or more times to the same contact or to a contact already available to the body.

The contact lists of the body 17, as chosen by the body 17, can be treated in "exclusion" mode or in "inclusion" mode. In "exclusion" mode, the method described above will be realized where possible contacts resulting from the processing of the distribution lists that are also contained in the lists of the body 17 will be discarded (and therefore excluded from the deduplicated lists). In "inclusion" mode, the contacts resulting from the processing of the distribution lists will be maintained and therefore included in the deduplicated lists only if those contacts are also present in the lists of the body 17; if, on the other hand, those contacts were not present in the lists of the body 17, they will be discarded.

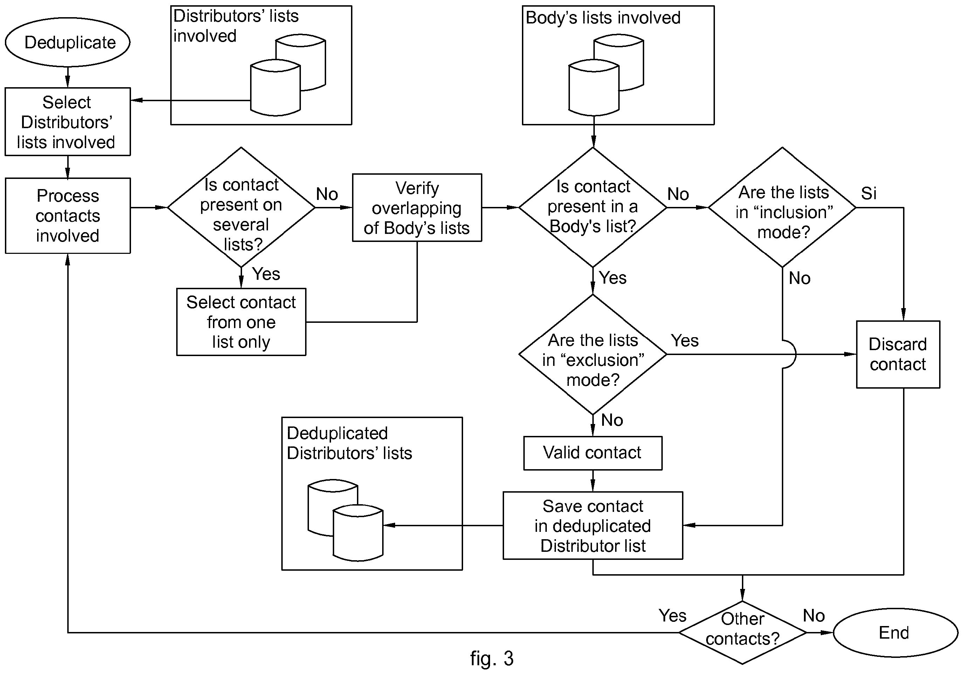

The diagram of fig. 3 shows a more specific example of a deduplication calculation algorithm or process used by the platform 10, substantially based on what is described above.

The deduplication is calculated by means of a first step of reading the lists of the distributors involved, for example one of the lists 14, 15 or 16.

The processing of each of the contacts involved begins with the verification of the presence of the contact on another list as well.

If the contact is present on several lists, then the contact is removed only from one of the lists involved, in which case the contact is selected from a single list.

Subsequently, the calculation procedure provides a step to verify if the selected contact is present on the list of the body 17, based on the lists involved of the body 17.

If the contact is not present in a list of the body, the procedure provides another interrogative step to establish if the lists involved of the body are in "inclusion" mode.

If the lists are in "inclusion" mode then the contact is discarded, whereas if the lists are not included, the contact is considered valid and saved in the distributor's deduplicated list.

If the contact is present in a list of the body, a step is made to verify if the lists of the body are in "exclusion" mode.

If so, the contact is discarded, while if not the contact is considered valid.

When establishing that the contact is valid, the contact is saved in the deduplicated list of the distributor, for example one of the lists 14p, 15p 16p shown in fig. 1.

The procedure provides a verification loop for the presence of other contacts to be deduplicated.

The central processor on which the platform 10 is installed provides a connection to the Internet, with a centralization and accessibility function available to the various distributors and to the body or bodies that want to carry out the advertising campaign.

The central processor will also have to be equipped with a sufficient amount of memory to memorize the original lists, the deduplicated lists, and the intermediate steps required for the deduplication procedure.

The central processor will also be equipped with a processor or multiprocessor able to perform various, even simultaneous, processing on the potentially numerous lists, and in a timely manner.

With regard to the distributors, for example distributors 11, 12 and 13 and the bodies, for example body 17, each of them will have their own and independent access credentials to the platform. Each distributor or body will only be able to see its own contact lists, and will have no access to or sight of the lists of others. Through their credentials, the distributors will be able to access a guided interface that will allow them to upload their own contact lists, and then receive or download their own deduplicated lists. Through their credentials, the bodies will be able to access a guided interface that will allow them to upload possible contact lists (for example existing clients) to be excluded, to select which distribution lists will be involved in the deduplication process and to select any possible customizable functioning parameters of the deduplication process.

The method and platform 10 described, in particular and advantageously, a method and centralized platform, can provide other features as described below.

A first "tracking" or "tracker" function that is able to verify, after the body has sent, that the contacts to whom he has sent messages with his technology correspond to those selected in deduplication.

Furthermore, it is possible to verify that a specific email box is really active and to qualify it as an active box in general or in specific sectors, see the active email verification feature described below.

The tracking function is applicable in particular to distribution lists consisting of email contacts, and has a dual control purpose:
1. to verify for the individual advertising campaigns that the publishers, when they convey the advertising message to their own deduplicated distribution lists, sending them through their own platforms, respect the condition of sending the message only to the deduplicated contacts that have been supplied;
2. to verify whether the individual contacts are active or inactive, based on the aggregated results of numerous advertising campaigns, allowing subsequent optimization activities by excluding inactive contacts.

Tracking is accomplished through a specific software code, which is integrated into the message to be conveyed, which allows to detect the actions of displaying messages delivered to users, and to associate the individual action with the specific contact that made it.

The purpose of control no. 1 is obtained by verifying that the contacts that have carried out the action of displaying the message actually belong to the deduplicated distribution lists for that advertising campaign. The platform is therefore able to restore the number of actions deriving from contacts actually belonging to the corresponding deduplicated distribution lists (correct actions) and those possibly resulting from contacts not included in said lists (unexpected actions). The comparison and relationship between unexpected actions and correct actions, also expressed by a numeric index calculated and restored by the platform for each individual publisher involved in the advertising campaign, therefore allows to evaluate the reliability of publishers both in the absolute sense and also in a relative sense with respect to each other. The platform also aggregates the results across several campaigns, to restore an overall analysis of the publisher's reliability.

The purpose of control no. 2 is obtained for each individual contact of each individual distribution list, recording over time the quantity of actions the tracker detects coming from said contact when included in a deduplicated list for that distribution list, then aggregating the data of the various advertising campaigns. The platform calculates the ratio between the number of actions made by the contact, and the number of advertising campaigns in whose deduplicated lists the contact itself was present; the index thus obtained is compared to the average index of the contacts belonging to the same distribution list, allowing to mark the contact as active or inactive depending on whether the index of certain thresholds set in the platform is reached. It should be noted that the same contact could be active in one distribution list and inactive in another distribution list; this is possible because different distribution lists can have different characteristics and use different sending platforms that affect the activity or not of the contact when receiving a message; for this reason the platform marks the contacts as active or inactive in a different way in the various distribution lists. This operation of marking the contacts allows subsequent optimization operations, such as for example excluding inactive contacts, or eliminating a double contact during the deduplication method from the distribution lists where it is inactive. This operation is also part of the "Active Email Check" function described below.

Another function of the present method and the centralized platform is to adopt an economic criterion called "Price Auction", during the deduplication procedure, to establish from which distribution lists to eliminate double contacts.

This function, of an economic nature, can be activated at the discretion of the body accessing the platform.

In the platform, for each distribution list that will be involved in an advertising campaign, it is possible to enter the cost of using said list that the body will have to pay to the publisher who owns the list so that the advertising message can be passed to the resulting deduplicated list. The cost is generally expressed in cost per single contact, however, it is envisaged that different types of cost of the distribution lists can be set in the platform, and the platform will calculate the equivalent cost per resulting contact.

During the method for deduplicating contacts from distribution lists, for each contact that will be detected as double because it is present on several distribution lists, the platform will identify which of these lists has the lowest cost per contact, thus eliminating the double contact from all the other lists. In this way, at the end of the deduplication method, the resulting deduplicated lists will have the lowest possible cost.

This is a function that allows a body to minimize the costs incurred to drive the advertising campaign.

This function, during the deduplication step, can be combined with the "Active Email Check" function as described below.

The "Active Email Check" function can work in two ways, that can also be used at the same time: 1) through the tracker function described above, 2) through an indication by the publisher or the body of a cluster of contacts defined as "power users", which can be subsequently verified and updated by the tracker function, which thus allows to constantly "clean" the databases and remove inefficiencies by sending communications to contacts who are no longer active.

The deduplication is thus enriched by functions that allow to deduplicate the double contact no longer simply in a proportional way among the lists but by selecting and then acquiring the contact from the database where two characteristics are simultaneously fulfilled:
- active email
- economy of price with respect to the quality of the user's response (the user opens the email messages).

The two options can be combined differently:
- when a double contact is found, it is associated with the list where it is active, if it is active in several lists (or none) then the list is selected where it costs less;
- when a double contact is found, it is associated with the list where it costs less, if the lower cost is identical in several lists then the list is selected where the contact is active.

The "Active Email Check" function allows better selection of the contacts, during the deduplication step, with the aim of selecting contacts that can bring a better result.

The aim of an advertising campaign is that the advertising message conveyed to the contacts is actually displayed. Since in advertising campaigns carried out through emails, there are several factors that can lead to a user not receiving the message correctly or not being interested in it (for example because of spam filters, or lack of interest or trust of a user toward a distribution list), it is important to be able to reduce these problems so that more users actually view the advertising message.

The platform therefore allows to obtain this purpose by marking users as active (users who perform more message display activities than average) or inactive (users who do not perform display activities or perform less than the average), according to thresholds that are set in the platform, thus reducing the above problems.

The function allows to mark users in two ways:
- manually, performed by the publisher when uploading a platform distribution list, where he can mark a portion of users as active (defined as "power users"); there is a maximum threshold of users that can be marked as active on the total number of users in the list, which the platform automatically checks to prevent abuse;
- automatically, performed by the platform through the tracker function described above, where the platform continuously collects the actions of displaying messages by users in relation to the various advertising campaigns, marking them as active or inactive according to predetermined thresholds and time windows, and keeping these marks up to date based on the evolution of the actions recorded over time.

It should be noted that the automatic tracking function, when enabled for that purpose, can keep updated over time, and can possibly correct, the indication of active users (power users) set manually by the publisher when uploading the distribution list.

The described function allows, at the discretion of the body during the deduplication process of the distribution lists for a given advertising campaign, to adopt an efficiency criterion to establish from which distribution lists to eliminate the double contacts.

During the method for deduplicating contacts from distribution lists, for each contact that will be detected as double because it is present on several distribution lists, the platform will identify in which of these lists the contact is marked as active, thus eliminating the double contact from all the other lists. In this way, at the end of the deduplication method, the resulting deduplicated lists will have the lowest possible cost.

It should be noted that the function, instead of marking a user as active or inactive, can alternatively and similarly be accomplished by assigning to each user a numerical or encoded value (for example a score, index, or a value deriving from a ratio or other calculation formula) that denotes the degree of greater or lesser activity. In this case, the functioning remains analogous to what has been described heretofore, bearing in mind that during the deduplication operation, the double contact will be eliminated from the distribution lists that have, for that contact, the values associated with a lesser user activity, so that the contact is included in the deduplicated list relating to the distribution list where it has the most favorable activity value.

The function described here is a function that allows a body to maximize efficiency in running the advertising campaign.

As another function obtained by the platform, the two "Price Auction" and "Active Email Check" functions, at the discretion of the body that wants to make an advertising campaign, can also be combined together in one of the following alternative ways, which provide the sequential application of the two functions described above during the method for deduplicating contacts from distribution lists:
A. before "Active Email Check" and after "Price Auction": when a double contact is found, it is eliminated from the lists where it is not marked as active, if it is active in several lists (or none) then from among these the list that has the lowest cost is selected.
B. before "Price Auction" and after "Active Email Check": when a double contact is found, it comes from lists where it has a higher cost, if the lower cost is identical in several lists then the list where the contact is active is selected.

These combinations are a function that allows a body to optimize the efficiency of an advertising campaign, combining optimization of costs with optimization of the effectiveness of the advertising campaign, giving the body the possibility of privileging one or the other aspect at its own discretion, according to order A or B with which it decides to combine the functions.

Deduplication can also be performed in a crossed manner, that is, by crossing different types of contact media, if two different data are associated with the same contact, for example the email address and telephone number of the SMS.

If, for example, the SMS number and email (and possibly the physical address for postal delivery) of a contact are available, one can choose to contact the user only with one (or more) of these tools, to avoid duplication of the medium on the same user (that is, to prevent the user from receiving both email and SMS).

In other words, if the distribution lists (even only a few of them) contain both the email address and the telephone number of the user (at least for some of the users), the platform can deduplicate the various types of contact, in order to prevent running the same advertising campaign to the same user both via email and also by SMS, thus creating an undesirable overlap.

The function operates during the deduplication method, when the existence of the email contact and the SMS contact for the same user is detected, only one of the two is selected for inclusion in the resulting deduplicated lists. At its own discretion, the body can give priority to email contact or SMS contact or random assignment between the two. The function, if enabled by the body, can also provide that, if both the SMS contact and the email contact are available for the user but the latter is marked as inactive, only the SMS contact is considered for the generation of the deduplicated lists.

The function can also include a third type of contact if it is present in the distribution lists, that is, the physical address for postal delivery, to which the body can decide to give a criterion of priority or random assignment rather than email contact or SMS contact. In this case, the physical address can also be considered during the deduplication process in the same way as described above, in order to be possibly selected instead of the email and SMS contact to be inserted in the deduplicated lists.

As we have seen, the association of a centralized deduplication with an encryption process allows to obtain an effective, reliable and secure procedure for deduplicating contacts from distribution lists, as described above.

In particular, the deduplication in itself, without introducing a non-reversible encryption theme, would not allow to overcome mistrust on the part of the publisher and/or the body, in providing and uploading their own lists of contacts inside a platform, which lists often represent a strategic asset of users on whom marketing activities can be performed in the case of the publisher or the entire client base in the case of the body.

On the contrary, when combined with the deduplication method, encryption allows to transfer the same quality of information but guarantees maximum protection to those who provide the database to be uploaded into the deduplication platform, therefore allowing all parties to adhere without worrying about transferring know-how or corporate assets to third parties. In fact, the encrypted information cannot be used for any purpose other than the specific purpose of deduplication.

Another fundamental and distinctive factor of the platform is, as mentioned, the process of centralizing the deduplication. The contact lists are not deduplicated "one to one" between two operators, for example between one body and a publisher, or between two publishers, but this happens simultaneously inside the same centralized system and simultaneously between the various lists of the publishers and the body, without the latter having access to and sight of the lists of the other operators involved.

A non-centralized deduplication process, but for example "one to one" between two publishers, even if hash encryption is used, would return deduplicated lists that, *a posteriori*, would allow each of the two publishers to know what the portion of the database in common with the other publisher is, and therefore to know really part of the list of a potential competitor. In fact, the individual publisher, only on his own contacts, is in possession of the association between the starting contact (email or SMS number) and the corresponding encrypted hash code; the moment he learns which the encrypted contacts in common with another publisher are, he could also know the email addresses or SMS numbers of these common contacts, and hence a portion of the list of the other publisher. Encryption therefore would partly lose its utility in a "one to one" deduplication. In the case of a "one to one" deduplication between a single publisher and a body, in the same way it would allow, after deduplication, to make known to the publisher a portion of the contacts (and therefore potentially the clients) of the body.

Simultaneously centralizing the deduplication process between lists of various publishers and the body's lists overcomes the problem described above because it prevents the individual publisher from knowing which other operators (publishers and bodies) are involved in the deduplication process and which lists have caused the elimination of contacts from their own lists during deduplication. This characteristic of centralizing the deduplication (compared to a simple direct deduplication or "one to one") guarantees for both bodies and publishers that the individual publisher will never be able to know *a posteriori* if the portion of their own contacts excluded because they are deduplicated is part of a list of the body or another publisher. Therefore, associated with encryption, the concept of centralized and simultaneous deduplication between the various operators ensures that important information is not transferred between competing parties or parties who do not want to share their contacts (for example, their client base represented by the contacts of a list).

It is clear that modifications and/or additions of parts may be made to the method and apparatus for deduplicating contacts from distribution lists as described heretofore, without departing from the field and scope of the present invention.

It is also clear that, although the present invention has been described with reference to some specific examples, a person of skill in the art shall certainly be able to achieve many other equivalent forms of method and apparatus for deduplicating contacts from distribution lists, having the characteristics as set forth in the claims and hence all coming within the field of protection defined thereby.

In the following claims, the sole purpose of the references in brackets is to facilitate reading: they are not to be considered as restrictive factors with regard to the field of protection claimed in the specific claims.

## Claims

1. Method for deduplicating contacts from distribution lists, **characterized in that** it comprises: a reception step, by a platform (10) installable on a processor, of a plurality of distribution lists (14, 15, 16, 19) sent by one or more distributors (11, 12, 13) or bodies (17) and which include a plurality of contacts, said platform (10) being univocal and centralized for all the distributors or bodies involved; a non-reversible encryption step (18) in which each of the contacts present in said lists (14, 15, 16, 19) is assigned a univocal encrypted code; a centralized comparison and processing step, by means of the platform (10), of the contacts present in said distribution lists in order to obtain distribution lists (14p, 15p, 16p) with univocally determined contacts and therefore without double contacts; a delivery step of said distribution lists (14p, 15p, 16p) without double contacts at least to said one or more distributors (11, 12, 13).

2. Method for deduplicating contacts from distribution lists as in claim 1, **characterized in that** said encryption step provides to calculate a non-reversible hashing function for each contact.

3. Method for deduplicating contacts from distribution lists as in claim 2, **characterized in that** a normalization function of the contact received is performed before the hashing function.

4. Method for deduplicating contacts from distribution lists as in claim 1, **characterized in that** a certain body (17) carries out a further step of controlling the distribution lists (14p, 15p, 16p) supplied by the platform (10) and in the possession of said body (17), eliminating the contacts contained in its own list (19) of contacts, in order to obtain distribution lists (14e, 15e, 16e) on which a double control has been carried out; said list (19) of contacts having previously undergone an encryption step (18) in which each of the contacts present in the list (19) of contacts has been assigned a univocal encrypted code.

5. Method for deduplicating contacts from distribution lists as in any claim hereinbefore, **characterized in that** it comprises a tracking function with the purpose of checking and verifying the deduplicated contacts in the possession of said body.

6. Method for deduplicating contacts from distribution lists as in claim 1, **characterized in that** during the centralized comparison and processing step said platform (19) considers the totality of the contacts received from the various distributors (11, 12, 13) and creates at least a first sub-group of deduplicated or univocal contacts and at least a second sub-group of double contacts.

7. Method for deduplicating contacts from distribution lists as in claim 6, **characterized in that** the platform (10) processes the sub-group of duplicated contacts, considering them only once for each duplicated contact, so that each contact is assigned to only one of said lists without double contacts.

8. Method for deduplicating contacts from distribution lists as in any claim hereinbefore, **characterized in that** if there are double contacts present in two or more lists, a proportional criterion is followed to establish from which distribution list or lists to eliminate the double contact.

9. Method for deduplicating contacts from distribution lists as in any claim hereinbefore, **characterized in that** if there are double contacts present in two or more lists, a priority deduplication criterion as established by the body (17) is followed.

10. Method for deduplicating contacts from distribution lists as in any claim hereinbefore, **characterized in that** it comprises a function of verifying active contacts.

11. Method for deduplicating contacts from distribution lists as in any claim hereinbefore, **characterized in that** it comprises a crossed deduplication function, if for a given contact two or more different data are provided.

12. Apparatus for deduplicating contacts from distribution lists, comprising a central processor on which a centralized platform (10) can be installed, configured to actuate a method for deduplicating contacts from distribution lists (14, 15, 16) as in any claim hereinbefore, said central processor being configured to transmit and receive data from one or more data processing units in possession of one or more distributors (11, 12, 13) and of one or more bodies (17).
